# EUROPÄISCHE PATENTANMELDUNG

(11) **EP 1 102 183 A2**
(43) Veröffentlichungstag der Anmeldung: **23.05.2001**
(21) Anmeldenummer: 00125406.9
(22) Anmeldetag: 20.11.2000
(51) Int. Cl.: G06F 17/60

(54) **System und Verfahren zum Erstellen von Kleinanzeigen im Internet und Set für ein System zum Erstellen von Kleinanzeigen im Internet**

(30) Priorität: 01.12.1999 DE 19957895; 19.11.1999 DE 19955958; 19.11.1999 DE 29920418 U
(71) Anmelder: guideguide AG, 53424 Rolandseck (DE)
(72) Erfinder: Hecken, Michael, 53424 Oberwinter (DE)
(74) Vertreter: Gesthuysen, von Rohr & Eggert

(57) **Zusammenfassung**

Die Erfindung betrifft ein System und ein Verfahren zum Erstellen von Kleinanzeigen (2) im Internet. Um das Erstellen von Kleinanzeigen (2) für Nutzer so einfach wie möglich zu machen, sind folgende aufeinanderfolgende Verfahrensschritte vorgesehen:
a) Bereitstellen eines Sets (3) mit wenigstens einem Formular (4) zur Aufnahme analoger Textinformation und einer Kamera (5) mit Film (6) zur Aufnahme analoger Bildinformation,
b) Angabe von analoger Textinformation auf dem Formular (4) und Aufnahme von analoger Bildinformation über die Kamera (5),
c) Zurückführen der Kamera (5) mit Film (6) oder lediglich des Films (4) sowie des Formulars (4) an eine Sammelstation (16),
d) Anfertigen wenigstens eines Bildinformation aufweisenden Fotos (18),
e) Einscannen wenigstens eines Fotos (18) und des Formulars (4) und Digitalisieren der eingescannten Daten,
f) Speichern der digitalisierten Daten in einer Datenbank (20) und
g) automatisches rechnergesteuertes Erstellen einer Kleinanzeige (2) mittels einer Rechnereinrichtung (21) im Internet unter Verwendung der digitalisierten Daten.

## Beschreibung

Die Erfindung betrifft ein System und ein Verfahren zum Erstellen von Kleinanzeigen im Internet sowie einen neuartigen Set für ein System der vorgenannten Art.

Kleinanzeigen werden derzeit in der Regel in Zeitungen und Zeitschriften veröffentlicht. Gerade in Zeitungen ist es nicht üblich, die über die Zeitung angebotenen Waren wie Fahrzeuge, Möbel o. dgl. und insbesondere auch Immobilien auf Bildern darzustellen. Ein weiterer Nachteil des derzeit realisierten Verfahrens bei Kleinanzeigen in Zeitungen und Zeitschriften besteht darin, daß diese Printmedien häufig nur einmal in der Woche erscheinen, so daß ein kurzfristiges Veröffentlichen einer Kleinanzeige meist nicht möglich ist. Wird der Redaktionsschluß verpaßt, erscheint die Anzeige gar erst eine Woche später. Darüber hinaus ist es bei den in den Printmedien veröffentlichten Kleinanzeigen nachteilig, daß die Kleinanzeige, wenn die Zeitung bzw. Zeitschrift einmal veröffentlicht ist, nicht mehr "gelöscht" werden kann. Dies ist für den Verkäufer insbesondere dann sehr nachteilig, wenn die mit einer Kleinanzeige angebotene Ware längst verkauft ist, zum Teil aber tage- oder wochenlang noch Anfragen hinsichtlich der ursprünglich angebotenen Ware erfolgen.

Um hier Abhilfe zu schaffen, bietet sich das Internet an. Über das Internet ist es grundsätzlich möglich, Kleinanzeigen von Waren aller Art zu veröffentlichen. Problematisch ist jedoch, daß nur ein kleiner Teil der Bevölkerung über einen Internetzugang verfügt und ein noch kleinerer Teil grundsätzlich in der Lage ist, eine Kleinanzeige im Internet zu veröffentlichen. Ein System oder ein Verfahren, das es auch der breiten Bevölkerung ermöglicht, das Internet zur Veröffentlichung von Kleinanzeigen zu nutzen, gibt es nicht.

Aufgabe der vorliegenden Erfindung ist es nun, ein System und ein Verfahren zum Erstellen von Kleinanzeigen im Internet zur Verfügung zu stellen, so daß es jedermann möglich ist, auch das Internet für Kleinanzeigen zu nutzen.

Zur Lösung der zuvor angeführten Aufgabe ist nun erfindungsgemäß ein System zum Erstellen von Kleinanzeigen im Internet vorgesehen, das bei einer ersten, besonders einfachen und kostengünstigen Ausgestaltung versehen ist mit einer Mehrzahl von wenigstens ein Formular zur Aufnahme analoger Textinformation und eine Kamera mit Film zur Aufnahme analoger Bildinformation aufweisenden Sets, mit einer Sammelstation für die Sets, mit einer Entwicklungsstation zur Entwicklung des Films und Anfertigung von Fotos, mit einer Scannereinrichtung zum Einscannen des die Textinformation aufweisenden Formulars und wenigstens eines Mittels der Kamera aufgenommen, entwickelten und die Bildinformation aufweisenden Fotos und zum Digitalisieren der eingescannten Daten, einer mit der Scannereinrichtung gekoppelten Rechnereinrichtung mit einer Datenbank und einem Anschluß der Rechnereinrichtung zur Verbindung mit dem Internet, so daß nachfolgend angegebene, aufeinanderfolgende Schritte durchführbar sind:
a) Bereitstellen eines Sets mit wenigstens einem Formular zur Aufnahme von Textinformation und einer Kamera mit Film zur Aufnahme analoger Bildinformation,
b) Angabe von analoger Textinformation auf dem Formular und Aufnahme von analoger Bildinformation über die Kamera,
c) Zurückführen der Kamera mit Film oder lediglich des Films sowie des Formulars an eine Sammelstation,
d) Anfertigen wenigstens eines Bildinformation aufweisenden Fotos,
e) Einscannen wenigstens eines Fotos und des Formulars und Digitalisieren der eingescannten Daten,
f) Speichern der digitalisierten Daten in einer Datenbank und
g) automaisches rechnergesteuertes Erstellen einer Kleinanzeige mittels der Rechnereinrichtung im Internet unter Verwendung der digitalisierten Daten.

Dementsprechend sind verfahrensgemäß folgende aufeinanderfolgende Schritte vorgesehen:
a) Bereitstellen eines Sets mit wenigstens einem Formular zur Aufnahme von Textinformation und einer Kamera mit Film zur Aufnahme analoger Bildinformation,
b) Angabe von analoger Textinformation auf dem Formular und Aufnahme von analoger Bildinformation über die Kamera,
c) Zurückführen der Kamera mit Film oder lediglich des Films sowie des Formulars an eine Sammelstation,
d) Anfertigen wenigstens eines Bildinformation aufweisenden Fotos,
e) Einscannen wenigstens eines Fotos und des Formulars und Digitalisieren der eingescannten Daten,
f) Speichern der digitalisierten Daten in einer Datenbank und
g) automatisches rechnergesteuertes Erstellen einer Kleinanzeige mittels einer Rechnereinrichtung im Internet unter Verwendung der digitalisierten Daten.

Bei einer alternativen Ausgestaltung des erfindungsgemäßen Systems ist dieses versehen mit einer Mehrzahl von wenigstens ein Formular zur Aufnahme analoger Textinformation aufweisenden Sets, mit einer Sammelstation für die Sets, mit einer Scannereinrichtung einerseits zum Einscannen des die Textinformation aufweisenden Formulars und andererseits zum Digitalisieren der eingescannten Daten, mit einer mit der Scannereinrichtung gekoppelten Rechnereinrichtung mit einer Datenbank und einem Anschluß der Rechnereinrichtung zur Verbindung mit dem Internet, so daß folgende aufeinanderfolgende Schritte durchführbar sind:
a) Bereitstellen eines Sets mit wenigstens einem Formular zur Aufnahme analoger Textinformation,
b) Angabe analoger Textinformation auf dem Formular,
c) Zurückführen des Formulars an eine Sammelstation,
d) Einscannen des Formulars und Digitalisieren der eingescannten Daten,
e) Speichern der digitalisierten Daten in einer Datenbank und
f) automatisches rechnergesteuertes Erstellen einer Kleinanzeige mittels der Rechnereinrichtung im Internet unter Verwendung der digitalisierten Daten.

Dementsprechend sind bei der alternativen Ausgestaltung des erfindungsgemäßen Verfahrens folgende aufeinanderfolgende Schritte vorgesehen:
a) Bereitstellen eines Sets mit wenigstens einem Formular zur Aufnahme analoger Textinformation,
b) Angabe analoger Textinformation auf dem Formular,
c) Zurückführen des Formulars an eine Sammelstation,
d) Einscannen des Formulars und Digitalisieren der eingescannten Daten,
e) Speichern der digitalisierten Daten in einer Datenbank und
f) automatisches rechnergesteuertes Erstellen einer Kleinanzeige mittels einer Rechnereinrichtung im Internet unter Verwendung der digitalisierten Daten.

Dabei versteht es sich, daß die Rechnereinrichtung mit Mitteln, nämlich unter anderem einem Betriebssystem, versehen ist, um eine Kleinanzeige im Internet unter Berücksichtigung der gespeicherten Daten aufzubauen. Im übrigen versteht es sich, daß mit dem Ausdruck "Erstellen von Kleinanzeigen im Internet" gemeint ist, daß die Kleinanzeigen rechnergesteuert als Dateien erstellt werden, die über das Internet von Dritten aufgerufen werden können, nachdem eine entsprechende Kommunikationsverbindung hergestellt worden ist.

Durch die Erfindung wird erstmals in besonders einfacher Weise eine Möglichkeit geschaffen, Kleinanzeigen im Internet auch für die breite Bevölkerung zu erstellen und so das Internet für jedermann zur Veröffentlichung von Kleinanzeigen zugänglich zu machen. Ein wesentlicher Teil der Erstellung der Kleinanzeige im Internet erfolgt dabei über den Datenbankbetreiber, der nachfolgend als Hersteller bezeichnet wird, nämlich das Bereitstellen des Sets, das Entwickeln des Films, das Anfertigen der Fotos, soweit sie erforderlich sind, das Einscannen und das Digitalisieren der eingescannten Daten, das Speichern der digitalisierten Daten in einer Datenbank und das ausschließlich bzw. automatische rechnergesteuerte Erstellen der Kleinanzeige unter Verwendung der digitalisierten Daten. Das ausschließlich rechnergesteuerte Erstellen der Kleinanzeige, das einen wesentlichen Aspekt der Erfindung darstellt, erfolgt über ein Betriebssystem, so daß jegliches manuelles Programmieren zur Erstellung der Kleinanzeige entfällt. Hierdurch werden nicht nur Fehler beim individuellen Programmieren ausgeschlossen, dieses Verfahren ist auch ungewöhnlich schnell. Vom Nutzer sind lediglich das Formular auszufüllen und die gewünschten Aufnahmen über die Kamera anzufertigen. Die erforderlichen Hilfsmittel werden dem Nutzer in Form des Sets vom Hersteller zur Verfügung gestellt, der einen wesentlichen Bestandteil der vorliegenden Erfindung darstellt, da hierdurch der breiten Bevölkerung in einfacher Weise der Zugang zum Internet eröffnet wird.

Die in den Ansprüchen 1 und 9 bzw. 2 und 10 angegebenen Alternativen unterscheiden sich dahingehend, daß bei der in den Ansprüchen 2 und 10 angegebenen Alternative die Kleinanzeige grundsätzlich lediglich unter Verwendung analoger Textinformation erzeugt wird. Die Verwendung einer Kamera ist hierbei nicht unbedingt erforderlich. Im übrigen läßt es die in den Ansprüchen 2 und 10 angegebene Alternative grundsätzlich natürlich auch zu, eine Kamera und zwar insbesondere auch eine Digitalkamera zu verwenden. In einem derartigen Falle würden die digitalisierten Daten der Digitalkamera unmittelbar der Datenbank zugeführt, ohne daß ein Einscannen erforderlich wäre. Die in den Ansprüchen 2 und 10 angegebene Alternative unter Verwendung einer Digitalkamera ist allerdings insofern nachteilig, da Digitalkameras - jedenfalls derzeit - mit vergleichsweise hohen Kosten verbunden sind, was bei Analogkameras, wie sie bei der in den Ansprüchen 1 und 9 angegebenen Alternative vorgesehen sind, nicht der Fall ist. Die in den Ansprüchen 2 und 10 angegebene Alternative läßt es im übrigen auch zu, daß vom Nutzer keine analoge Bildinformation über eine vom Hersteller bereitgestellte Kamera zur Verfügung gestellt wird, sondern statt dessen ein bereits die Bildinformation aufweisendes Foto, das dann, wie bei der in den Ansprüchen 1 und 9 angegebenen Alternative beschrieben, anschließend zusammen mit dem Formular eingescannt und digitalisiert wird.

Um etwaige Fehler beim Einscannen auszuschließen und um die Einscanngeschwindigkeit zu erhöhen, ist weiterhin vorgesehen, daß während des Einscannens des Formulars lediglich die angegebene analoge Textinformation und ggf. eine Kennung zur Erkennung des betreffenden Formulars eingelesen werden. Außerdem ist in diesem Zusammenhang vorgesehen, daß der Set bzw. das System ein Schreibgerät aufweist, wobei das Schreibgerät in einer anderen Farbe schreibt als in der Farbe des vorgedruckten Formulartextes des Formulars. So kann das Schreibgerät beispielsweise in schwarzer Farbe schreiben, während die Farbe des Formulartextes bunt, also "nicht-schwarz" ist. Lediglich die Kennung des Formulars weist die Farbe des Schreibgerätes auf, so daß sichergestellt ist, daß auch tatsächlich nur die relevanten Daten eingelesen werden. Es darf in diesem Zusammenhang darauf hingewiesen werden, daß es bei lediglich einem Formular grundsätzlich nicht erforderlich ist, eine Kennung vorzusehen; werden jedoch mehrere Formulare verwendet, ist es wichtig, daß die jeweilige Textinformation beim Einscannen auch entsprechend erkannt wird. Dieses "Erkennen" erfolgt über die auf dem jeweiligen Formular vorgesehene Kennung.

Von ganz besonderem Vorteil ist es weiterhin, daß ein externer Zugriff über das Internet auf die Daten des Nutzers in der Datenbank des Herstellers und eine Veränderung der Daten in der Datenbank nach externer Eingabe eines Paßwortes möglich ist. Hierbei wird unter einer Veränderung der Daten auch eine Deaktivierung, bei der die Daten in der Datenbank erhalten bleiben, jedoch für einen vorgegebenen Zeitraum nicht mehr im Internet veröffentlicht werden, oder aber ein Löschen der Daten aus der Datenbank verstanden. Die externe Zugriffsmöglichkeit auf die Daten des Nutzers in der Datenbank stellt letztlich einen ganz wesentlichen Teilaspekt der vorliegenden Erfindung dar. Die Datenbank wird bei dem Hersteller erstellt, geführt und verwaltet, so daß Dritte an sich keinen Zugriff auf die Datenbank haben, da der Zugang zur Datenbank über Sicherungsmittel gegen einen externen Zugriff gesichert ist. Beliebige Dritte haben also lediglich die Möglichkeit, die veröffentlichte Kleinanzeige zu lesen, haben aber nicht die Möglichkeit, deren Inhalt zu verändern.

Bei Nutzern kann es ohne weiteres vorkommen, daß diese ihre Kleinanzeige ändern, löschen oder unterdrücken wollen. Durch die erfindungsgemäße Ausgestaltung ist es nun möglich, daß der Nutzer auf die für ihn externe Datenbank des Hersteller zugreifen und die einzelnen Daten seiner Kleinanzeige ändern kann. Auch hierbei entfällt jegliches Programmieren, da die Änderung bzw. Erstellung der Kleinanzeige nach Eingabe der neuen Daten ausschließlich rechnergesteuert über das Betriebssystem erfolgt. Um die Änderung vornehmen zu können, ist als ein Sicherungsmittel die externe Eingabe eines Paßwortes, also die Eingabe eines Paßwortes durch den Nutzer, erforderlich. Die notwendige Eingabe eines Paßworts dient letztlich Sicherungszwecken, um einen Mißbrauch zu vermeiden. Dabei versteht es sich natürlich, daß der Nutzer lediglich Zugriff auf "seine" Datei hat, es ihm also nicht möglich ist, auf Dateien und damit auf Daten anderer Nutzer zuzugreifen.

Um in diesem Zusammenhang die Änderung bzw. Aktualisierung der Kleinanzeige bzw. der in der Datenbank gespeicherten Daten für den Nutzer so einfach wie möglich zu machen, sind die Daten in der Datenbank in einer der Darstellung des Formulars entsprechenden Weise gespeichert. Besonders bietet es sich dabei an, daß die Daten genauso gespeichert sind, wie dies auf dem dem Nutzer bereits bekannten Formular vorgesehen ist. Grundsätzlich sind aber auch andere Arten der Speicherung bzw. Darstellung der Daten möglich.

Durch die Möglichkeit des Zugriffs über das Internet auf eine externe Datenbank ergibt sich im übrigen der erhebliche Vorteil, daß die Kosten zur Änderung einer Kleinanzeige Seite sehr gering gehalten werden können, da der Nutzer nach erstmaligem Erscheinen seiner Kleinanzeige diese in einfacher Weise selbst verändern kann.

Um die mit der Erfindung verbundenen Kosten weiter zu verringern, bietet es sich im übrigen an, daß die Kamera eine analoge Einweg-Kamera ist.

Zur Verbesserung des Nutzerkomforts in Verbindung mit dem erfindungsgemäßen Verfahren ist es im übrigen von Vorteil, daß der Set ein insbesondere aus Kunststoff bestehendes Kuvert zur Aufnahme der Kamera oder des Films sowie des Formulars aufweist. Durch das aus Kunststoff bestehende Kuvert wird letztlich eine Beschädigung des Films oder des Formulars verhindert, was bei aus Papier oder Pappe bestehenden Kuverts nicht gewährleistet werden könnte.

Im übrigen bietet es sich besonders an, daß der Set eine aus Kunststoff bestehende und insbesondere verschließbare Tasche zur Aufnahme des Formulars, des Schreibgeräts, des Kuverts und der Kamera aufweist. Der Set stellt damit eine einfach zu handhabende Einheit dar, in der alle erforderlichen Mittel aufgenommen sind. Zweckmäßigerweise sollte die Tasche dabei aus Kunststoff bestehen, um äußere Einflüsse, wie beispielsweise Feuchtigkeit, von den einzelnen Mitteln des Sets fernzuhalten.

Im Ergebnis muß sich der Nutzer aufgrund des erfindungsgemäßen Systems und Verfahrens letztlich um fast nichts mehr kümmern, um seine Kleinanzeige im Internet erscheinen zu lassen. Es werden lediglich die Text- und Bildinformationen von dem Nutzer benötigt. Hierzu wird dem Nutzer ein Formularsatz, ein, wie zuvor beschrieben, in besonderer Weise mit dem Formular zusammenwirkendes Schreibgerät sowie eine Kamera zur Verfügung gestellt, wobei die analogen Informationsträger anschließend über das Kuvert der Sammelstation zugeführt werden.

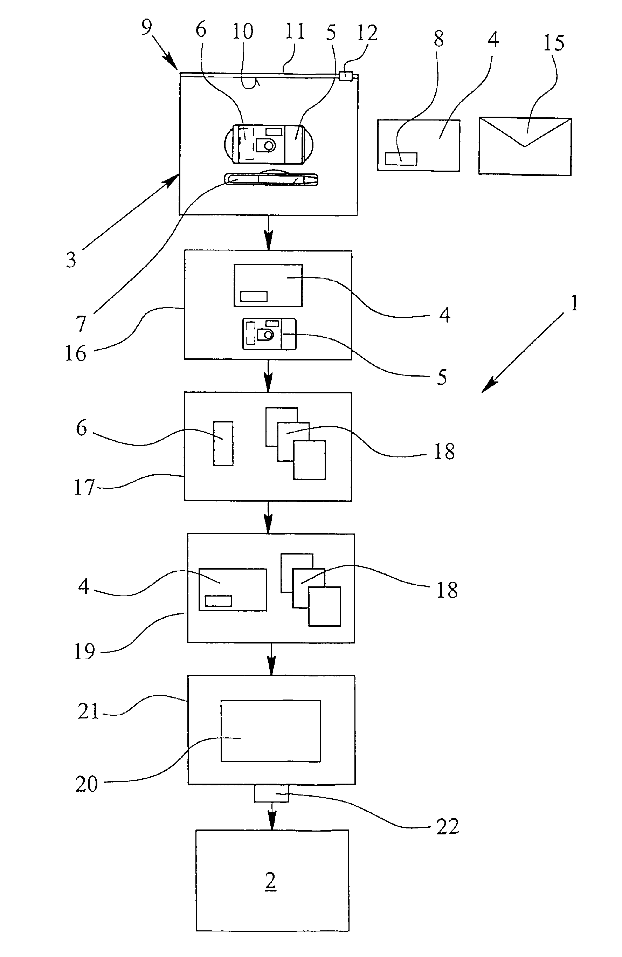

In der einzigen Figur ist der Verfahrensablauf beim erfindungsgemäßen Verfahren und sind Einzelheiten des erfindungsgemäßen Systems und Sets schematisch dargestellt.

Die einzige Figur zeigt ein System 1 zum Erstellen von Kleinanzeigen im Internet, von denen lediglich eine dargestellt ist. Grundlage oder Basis des Systems 1 sind eine Mehrzahl von Sets 3, die den einzelnen Nutzern vom Hersteller zur Verfügung gestellt werden und die bevorzugt zum Erstellen von über das Internet zugänglichen Kleinanzeigen oder Internetseiten verwendet werden. Jeder Set 3 weist vorliegend einen Formularsatz mit einer Mehrzahl von Formularen 4 zur Aufnahme analoger Textinformationen des Nutzers und eine Kamera 5 mit einem Film 6 zur Aufnahme analoger Bildinformationen auf. Des weiteren weist der Set 3 ein Schreibgerät 7 in Form eines Kugelschreibers auf. Die Farbe der Tinte des Schreibgeräts 7 ist andersfarbig als die Farbe des vorgedruckten Formulartextes des Formulars 4, was eine Rolle beim nachfolgend noch zu beschreibenden Einscannen und Digitalisieren des Formulars 4 spielt. Neben dem Formulartext weist das Formular 4 aber auch eine scannerlesbare Kennung 8 gleicher Farbe wie die Farbe der Tinte des Schreibgeräts 7 auf.

Der Formularsatz mit den Formularen 4, die Kamera 5 und das Schreibgerät 2 sind - wenn sie dem Nutzer zur Verfügung gestellt werden - in einer Tasche 9 angeordnet, die aus einem durchsichtigen Kunststoff besteht. Die Tasche 9 weist eine verschließbare Zugangsöffnung 10 auf. Zum Verschließen dient ein sich über die Länge des Zugangsöffnung 10 erstreckender Druckverschluß 11, der der Einfachheit halber mit einem entlang der Zugangsöffnung 10 verschiebbaren Verschlußelement 12 verschließbar ist. Der Druckverschluß 11 und das Verschlußelement 12 wirken dabei in Art eines Reißverschlusses zusammen. Die Größe der Tasche 9 ist derart, daß der Formularsatz, die Kamera 5 und das Schreibgerät 7 ohne weiteres in der Tasche 9 angeordnet werden können.

Bei einer nicht dargestellten Ausführungsform sind die Formulare, die Kamera und das Schreibgerät in einem Träger angeordnet, der vorzugsweise aus einem massiven Leichtkunststoff besteht. Der Träger ist mit einem Trägerunterteil und einem Trägerdeckteil versehen. Die Anordnung des Formularsatzes, der Kamera und des Schreibgeräts im Trägerunterteil erfolgt derart, daß für die Kamera und das Schreibgerät entsprechende Ausnehmungen mit Griffmulden vorgesehen sind, in die die Kamera und das Schreibgerät eingelegt sind. Randseitig ist das Trägerunterteil mit einem im wesentlichen umlaufenden Rand versehen. Der von dem Rand begrenzte Innenraum dient zur im wesentlichen spielfreien Aufnahme des Formularsatzes der Formulare sowie zur formschlüssigen Fixierung des Deckelteils.

Die Kamera 5 selbst stellt eine Einweg-Kamera dar, die mit entsprechend geringen Kosten verbunden ist. Im übrigen bietet die Kamera, wenn sie der Sammelstation 16 zugeführt wird, auch einen Schutz für den Film 6. Schließlich weist der Set 3 noch ein Kuvert 15 auf, das vorliegend auch aus Kunststoff besteht und zur Aufnahme der Kamera 5 oder des Films 6 sowie des Formulars 4 vorgesehen ist.

Nach Bereitstellen des Sets 3 werden die erforderlichen analogen Textinformationen und Bildinformationen vom Nutzer angegeben bzw. aufgenommen. In diesem Zusammenhang kann vorgesehen sein, daß der Nutzer zwischen verschiedenen Grundtypen von vorgegebenen Darstellungen der Kleinanzeigen wählen kann, in die die einzelnen Daten später "eingebaut" werden. Auch die Farbwahl der Kleinanzeige 2 obliegt dem Nutzer.

Anschließend werden das Formular 4 und die Kamera 5 oder auch nur der Film 6 einer Sammelstation 16 des Herstellers zugeführt. Im Anschluß an die Sammelstation 16 wird der Film 6 der Kamera 5 entnommen. In einer Entwicklungsstation 17 erfolgt die Entwicklung des Films 6 und die Anfertigung von Fotos 18. Anschließend werden die Fotos 18 und die einzelnen Formulare 4 einer Scannereinrichtung 19 zugeführt. Es erfolgt dort das Einscannen der einzelnen Fotos 18 und der Formulare 4 und das Digitalisieren der eingescannten Daten. Gegebenenfalls erfolgt eine Fehlerkontrolle der Daten. Die Daten werden dann einer Datenbank 20 einer Rechnereinrichtung 21 zugeführt. Die Rechnereinrichtung 21 ist über einen Anschluß 22 mit dem Internet verbunden. Aufgrund der in der Datenbank 20 gespeicherten digitalisierten Daten wird die mit diesen Daten versehene Kleinanzeige 2 des Nutzers über ein Betriebssystem automatisch erstellt, ohne daß weitere manuelle Eingaben erforderlich sind. Anschließend kann die Kleinanzeige von jedermann aufgerufen werden.

Nicht dargestellt ist im einzelnen, daß der externe Zugriff auf die Datenbank 20 des Herstellers durch den Nutzer über das Internet möglich ist, um es dem Nutzer zu ermöglichen, die Daten seiner Kleinanzeige 2 zu ändern. Der Zugriff in die Datenbank 20, und zwar nur in die jeweilige Datei des Nutzers, ist möglich nach Angabe eines entsprechenden Paßwortes. Die Erstellung der geänderten Kleinanzeige 2 erfolgt dann wieder automatisch über das Betriebssystem, also rechnergesteuert, ohne daß der Nutzer weiteres veranlassen muß. Auf diese Weise kann der Nutzer seine Kleinanzeige nicht nur ändern, er kann sie auch löschen oder für einen bestimmten vorgegebenen Zeitraum unterdrücken, so daß die Kleinanzeige für einen vorgegebenen Zeitraum nicht im Internet erscheint bzw. über das Internet von Dritten in an sich bekannter Weise aufgerufen werden kann.

## Patentansprüche

1. System (1) zum Erstellen von Kleinanzeigen (2) im Internet, mit einer Mehrzahl von wenigstens ein Formular (4) zur Aufnahme analoger Textinformation und eine Kamera (5) mit Film (6) zur Aufnahme analoger Bildinformation aufweisenden Sets (3), mit einer Sammelstation (16) für die Sets (3), mit einer Entwicklungsstation (17) zur Entwicklung des Films (6) und Anfertigung von Fotos (18), mit einer Scannereinrichtung (19) einerseits zum Einscannen des die Textinformation aufweisenden Formulars (4) und wenigstens eines mittels der Kamera (5) aufgenommenen, entwickelten und die Bildinformation aufweisenden Fotos (18) und andererseits zum Digitalisieren der eingescannten Daten, mit einer mit der Scannereinrichtung (19) gekoppelten Rechnereinrichtung (21) mit einer Datenbank (20) und mit einem Anschluß (22) der Rechnereinrichtung (21) zur Verbindung mit dem Internet, so daß nachfolgend angegebene, aufeinanderfolgende Schritte durchführbar sind:
a) Bereitstellen des Sets (3) mit wenigstens einem Formular (4) zur Aufnahme analoger Textinformation und der Kamera (5) mit dem Film (6) zur Aufnahme analoger Bildinformation,
b) Angabe von analoger Textinformation auf dem Formular (4) und Aufnahme von analoger Bildinformation über die Kamera (5),
c) Zurückführen der Kamera (5) mit Film (6) oder lediglich des Films (6) sowie des Formulars (4) an die Sammelstation (16),
d) Anfertigen wenigstens eines Bildinformation aufweisenden Fotos (18),
e) Einscannen wenigstens eines Fotos (18) und des Formulars (4) und Digitalisieren der eingescannten Daten,
f) Speichern der digitalisierten Daten in der Datenbank (20) und
g) automaisches rechnergesteuertes Erstellen einer Kleinanzeige (2) mittels der Rechnereinrichtung (21) im Internet unter Verwendung der digitalisierten Daten.

2. System (1) zum Erstellen von Kleinanzeigen (2) im Internet, mit einer Mehrzahl von wenigstens ein Formular (4) zur Aufnahme analoger Textinformation aufweisenden Sets (3), mit einer Sammelstation (16) für die Sets (3), mit einer Scannereinrichtung (19) einerseits zum Einscannen des die Textinformation aufweisenden Formulars (4) und andererseits zum Digitalisieren der eingescannten Daten, mit einer mit der Scannereinrichtung (19) gekoppelten Rechnereinrichtung (21) mit einer Datenbank (20) und mit einem Anschluß (22) der Rechnereinrichtung (21) zur Verbindung mit dem Internet, so daß nachfolgend angegebene, aufeinanderfolgende Schritte durchführbar sind:
a) Bereitstellen des Sets (3) mit wenigstens einem Formular (4) zur Aufnahme analoger Textinformation,
b) Angabe von analoger Textinformation auf dem Formular (4),
c) Zurückführen des Formulars (4) an die Sammelstation (16),
d) Einscannen des Formulars (4) und Digitalisieren der eingescannten Daten,
e) Speichern der digitalisierten Daten in einer Datenbank (20) und
f) automatisches rechnergesteuertes Erstellen einer Kleinanzeige (2) mittels der Rechnereinrichtung im Internet unter Verwendung der digitalisierten Daten.

3. System nach Anspruch 1 oder 2, dadurch gekennzeichnet, daß die Scannereinrichtung (19) derart ausgebildet ist, daß während des Scannens des Formulars (4) lediglich die angegebene analoge Textinformation und ggf. eine Kennung (8) zur Erkennung des Formulars (4), nicht jedoch der vorgedruckte Formulartext eingelesen werden.

4. System nach einem Ansprüche 1 bis 3, dadurch gekennzeichnet, daß die Rechnereinrichtung (21) und die Datenbank (20) derart ausgebildet sind, daß ein externer Zugriff über das Internet auf die Daten in der Datenbank (20) und eine externe Veränderung der Daten in der Datenbank (20) nach externer Eingabe eines Paßwortes vorgesehen ist und daß die Löschung und/oder Änderung der Kleinanzeige (2) unter Berücksichtigung der geänderten Daten ausschließlich rechnergesteuert über die Rechnereinrichtung (21) erfolgt.

5. System nach einem der Ansprüche 1 bis 4, dadurch gekennzeichnet, daß die Datenbank (20) derart ausgebildet ist, daß die Daten in der Datenbank (20) in einer der Darstellung des Formular (4) entsprechenden oder identischen Weise gespeichert sind.

6. Set (3) für ein System (1) zur Verwendung zum Erstellen von Kleinanzeigen (2), Internetseiten und dergleichen im Internet nach einem der vorhergehenden Ansprüche, mit wenigstens einem Formular (4) zur Angabe analoger Textinformation und einer Kamera (5) mit Film (6) zur Aufnahme analoger Bildinformation.

7. System bzw. Set nach einem der vorhergehenden Ansprüche, dadurch gekennzeichnet, daß der Set (3) ein Schreibgerät (7) aufweist, daß, vorzugsweise, das Schreibgerät (7) in einer anderen Farbe schreibt als in der Farbe des vorgedruckten Formulartextes des Formulars (4) und daß, vorzugsweise, das Formular (4) eine scannerlesbare Kennung (8) gleicher Farbe wie die Farbe des Schreibgeräts (7) aufweist.

8. System bzw. Set nach einem der vorhergehenden Ansprüche, dadurch gekennzeichnet, daß der Set (3) ein insbesondere aus Kunststoff bestehendes Kuvert (15) zur Aufnahme der insbesondere als Einweg-Kamera ausgebildeten Kamera (5) oder des Films (6) sowie des Formulars (4) aufweist, und daß, vorzugsweise der Set (3) eine insbesondere aus Kunststoff bestehende, vorzugsweise verschließbare Tasche (10) zur Aufnahme der Formulars (4), des Schreibgeräts (7) und der Kamera (5) aufweist und daß, vorzugsweise, zum Verschließen der Tasche (10) ein Druckverschluß (11) vorgesehen ist.

9. Verfahren zum Erstellen von Kleinanzeigen (2) im Internet, mit folgenden aufeinanderfolgenden Verfahrensschritten:
a) Bereitstellen eines Sets (3) mit wenigstens einem Formular (4) zur Aufnahme analoger Textinformation und einer Kamera (5) mit Film (6) zur Aufnahme analoger Bildinformation,
b) Angabe von analoger Textinformation auf dem Formular (4) und Aufnahme von analoger Bildinformation über die Kamera (5),
c) Zurückführen der Kamera (5) mit Film (6) oder lediglich des Films (6) sowie des Formulars (4) an eine Sammelstation (16),
d) Anfertigen wenigstens eines Bildinformation aufweisenden Fotos (18),
e) Einscannen wenigstens eines Fotos (18) und des Formulars (4) und Digitalisieren der eingescannten Daten,
f) Speichern der digitalisierten Daten in einer Datenbank (20) und
g) automatisches rechnergesteuertes Erstellen einer Kleinanzeige (2) mittels einer Rechnereinrichtung (21) im Internet unter Verwendung der digitalisierten Daten.

10. Verfahren zum Erstellen von Kleinanzeigen (2) im Internet, mit folgenden aufeinanderfolgenden Schritten:
a) Bereitstellen eines Sets (3) mit wenigstens einem Formular (4) zur Aufnahme analoger Textinformation,
b) Angabe von analoger Textinformation auf dem Formular (4),
c) Zurückführen des Formulars (4) an eine Sammelstation (16),
d) Einscannen des Formulars (4) und Digitalisieren der eingescannten Daten,
e) Speichern der digitalisierten Daten in einer Datenbank (20) und
f) automatisches rechnergesteuertes Erstellen einer Kleinanzeige (2) mittels einer Rechnereinrichtung (21) im Internet unter Verwendung der digitalisierten Daten.

11. Verfahren nach einem der vorhergehenden Ansprüche, dadurch gekennzeichnet, daß während des Scannens des Formulars (4) lediglich die angegebene analoge Textinformation und ggf. eine Kennung (8) zur Erkennung des Formulars (4), nicht jedoch der vorgedruckte Formulartext eingelesen werden.

12. Verfahren nach einem der vorhergehenden Ansprüche, dadurch gekennzeichnet, daß ein externer Zugriff über das Internet auf die Daten in der Datenbank (20) und eine externe Veränderung der Daten in der Datenbank (20) nach externer Eingabe eines Paßwortes vorgesehen ist, und daß, vorzugsweise, die Löschung und/oder Änderung der Kleinanzeige (2) unter Berücksichtigung der geänderten Daten ausschließlich rechnergesteuert über die Rechnereinrichtung (21) erfolgt.
